# FASCICULE DE BREVET EUROPEEN

(11) **EP 3 210 658 B1**
(45) Date de publication et mention de la délivrance du brevet: **19.12.2018**
(21) Numéro de dépôt: 17154744.1
(22) Date de dépôt: 06.02.2017
(51) Int. Cl.: B64C 25/20, A63H 27/00, B64C 39/02

(54) **DRONE MUNI DE SUPPORTS DE DRONE RELEVABLES**
DROHNE, DIE MIT HOCHKLAPPBAREN DROHNENHALTERUNGEN AUSGESTATTET IST
DRONE PROVIDED WITH FOLDABLE DRONE SUPPORTS

(30) Priorité: 25.02.2016 FR 1651568
(43) Date de publication de la demande: 30.08.2017
(73) Titulaire: Parrot Drones, 75010 Paris (FR)
(72) Inventeur: SANLAVILLE, Thierry, 75015 PARIS (FR); DUCLOUX, Maxime, 91660 Mereville (FR); MORRA, Flavien, 93500 Pantin (FR); FARGEAU, Karim, 75012 Paris (FR)
(74) Mandataire: Dupuis-Latour, Dominique

(56) Documents cités:
- CN-A- 104 590 556
- CN-A- 104 626 904
- CN-A- 105 314 105
- GB-A- 2 483 881
- KR-A- 20150 145 853

## Description

L'invention concerne les engins volants motorisés tels que les drones, notamment les drones à voilure tournante de type quadricoptère.

Un exemple typique d'un tel drone est l'*AR.Drone,* le *Bebop Drone* ou le *Bebop 2* de Parrot SA, Paris, France, qui est un quadricoptère équipé d'une série de capteurs (accéléromètres, gyromètres trois axes, altimètre), et peut comprendre au moins une caméra video frontale captant une image de la scène vers laquelle est dirigé le drone.

Ces drones sont pourvus de plusieurs rotors entrainés par des moteurs respectifs aptes à être commandés de manière différenciée afin de piloter le drone en attitude et en vitesse.

Ces quadricoptères sont équipés de quatre blocs propulseurs munis chacun d'hélice. Les blocs propulseurs sont positionnés à l'extrémité des bras de liaison reliant les blocs propulseurs au corps du drone. En outre, ces drones comprennent une pluralité de pieds afin de supporter le drone notamment lorsqu'il est au sol.

Les WO 2010/061099 A2, EP 2 364 757 A1 et EP 2 450 862 A1 (Parrot) décrivent le principe de pilotage d'un drone par l'intermédiaire d'un téléphone ou tablette multimedia à écran tactile et accéléromètres intégrés, par exemple un *smartphone* de type *iPhone* ou une tablette de type *iPad* (marques déposées).

Les commandes émises par le dispositif de pilotage sont au nombre de quatre, à savoir la rotation en roulis, c'est-à-dire le mouvement en rotation autour de son axe longitudinal, le tangage c'est-à-dire le mouvement de rotation autour de l'axe transversal, le cap aussi appelé lacet, c'est-à-dire la direction vers laquelle le drone est orienté, et l'accélération verticale.

Le dispositif de pilotage incorpore les divers organes de contrôle nécessaires à la détection des commandes de pilotage et à l'échange bidirectionnel de données via une liaison radio de type réseau local sans fil Wi-Fi (IEEE 802.11) ou *Bluetooth* directement établie avec le drone. Son écran tactile affiche l'image captée par la caméra frontale du drone, avec en superposition un certain nombre de symboles permettant le contrôle du vol et l'activation de commandes par simple contact du doigt de l'opérateur sur cet écran tactile.

La liaison radio sans fil bidirectionnelle comprend une liaison montante (de la tablette vers le drone) et une liaison descendante (du drone vers la tablette) pour transmettre des trames de données contenant :
- (de la tablette vers le drone) les commandes de pilotage, ci-après simplement désignées "commandes", envoyées à intervalles réguliers et de façon systématique ;
- (du drone vers la tablette) le flux video issu de la caméra ; et
- (du drone vers la tablette) en tant que de besoin, des données de vol établies par le drone ou des indicateurs d'état tels que : niveau des batteries, phase de vol (décollage, stabilisation automatique, posé au sol, etc.), altitude, défaut détecté, etc.

Pour permettre une telle communication, le drone comprend un moyen de communication relié à une antenne de sorte à permettre une communication avec le dispositif de pilotage.

Ces drones permettent aujourd'hui de transporter différents capteurs video embarqués sur sa structure ou sur un support. Ces capteurs sont par exemple une caméra video, une caméra 360°, une caméra stéréoscopique.

Un tel capteur est fréquemment positionné sous le drone et relié directement à la structure inférieure du drone ou dans ou sur un support lui-même relié à la structure inférieure du drone.

Une telle configuration de drone présente l'inconvénient suivant : le capteur video couvre dans son champ de vision au moins une partie des pieds du drone, voire l'ensemble des pieds du drone dans le cas d'un capteur video 360°. Les supports du drone, sur lesquels repose le drone au sol, entrant ainsi dans le champ de vision du capteur, viennent perturber la qualité de l'image et altèrent l'aspect visuel de la séquence video.

Cet inconvénient peut être pallié par un agencement tel que celui décrit par le CN 104 590 556 A. Ce document décrit un drone avec un corps central de forme aplatie, muni de quatre bras portant chacun à son extrémité un bloc propulseur, les bras étant rabattables contre le corps du drone pour faciliter le transport de celui-ci lorsqu'il n'est pas utilisé. Le drone emporte une nacelle suspendue sous une région ventrale du corps central et munie d'une caméra video orientable. Pour que le drone puisse se poser au sol sans endommager la nacelle, il est prévu des tiges supports qui sont déployées au moment de l'atterrissage et sont escamotées en vol, de manière à ne pas interférer avec le champ de vision de la caméra. Plus précisément, pendant le vol ces tiges se replient sous le drone, contre la face inférieure, plane, du corps central.

Les CN 105 314 105 A, CN 104 626 904 A et GB 2 483 881 A décrivent d'autres agencements possibles de pieds supports de drone, escamotables en vol.

Dans tous les cas, la présence de ces supports en position repliée pendant le vol est très handicapante sur le plan de l'aérodynamisme, du fait de la trainée de forme importante qu'ils engendrent. De fait, ces éléments, qui ne concourent en aucune façon au fonctionnement du drone en phase de vol, viennent freiner de façon importante le drone lorsque celui-ci évolue en vol horizontal à grande vitesse. Les performances de vol du drone en sont réduites d'autant, de même que le rendement énergétique global de propulsion, avec corrélativement une dégradation significative de l'autonomie de vol, qui est comme on le sait un facteur particulièrement critique pour tous les drones volants.

Tel est le problème technique que se propose de résoudre la présente invention.

A cet effet, l'invention propose un drone du type général divulgué par le CN 104 590 556 A précité, c'est-à-dire comprenant : un corps de drone ; des bras de liaison s'étendant à partir du corps de drone et comprenant à leur extrémité un bloc propulseur ; au moins deux supports de drone s'étendant à partir du corps de drone, lesdits supports comprenant respectivement un moyen de relevage ; et au moins un dispositif de commande de relevage en liaison avec chacun des moyens de relevage des supports de drone de sorte que les supports de drone soient aptes à être relevés lorsque le drone est en vol.

De façon caractéristique de l'invention, en position relevée les supports de drone viennent respectivement en alignement avec les bras de liaison.

Très avantageusement, en position relevée les supports de drone forment respectivement le bord d'attaque des bras de liaison positionnés à l'arrière du drone et/ou le bord de fuite des bras de liaison positionnés à l'avant du drone, les positions avant et arrière des bras de liaison étant définies par rapport au sens principal de vol dudit drone.

Selon diverses caractéristiques subsidiaires :
- lesdits supports de drone comprennent respectivement deux pieds reliés entre eux par une section centrale, ladite section centrale étant apte à pivoter pour permettre le relevage des pieds ;
- le moyen de relevage d'un support de drone comprend une bielle de relevage et le dispositif de commande de relevage comprend des manivelles de relevage pivotantes reliées par un moyen de couplage respectivement à la bielle de relevage des supports de drone de sorte à permettre le relevage des supports de drone ;
- la manivelle de relevage est entrainée, en rotation par le dispositif de commande de relevage, à une extrémité par un axe de rotation et la manivelle de relevage comprend à son autre extrémité le moyen de couplage apte à coopérer avec la bielle de relevage du moyen de relevage ;
- le dispositif de commande de relevage comprend un motoréducteur d'entrainement dudit axe de rotation de la manivelle de relevage ;
- le moyen de relevage comprend dans sa partie centrale une articulation pivotante du support et deux branches s'étendant de la partie centrale et formant un angle entre elles, l'une des branches comprend la bielle de relevage reliée à une manivelle de relevage du dispositif de commande de relevage et la deuxième branche étant solidaire du support de drone ;
- les supports de drone sont aptes à être désolidarisés du corps de drone, et comprennent respectivement un moyen de verrouillage/déverrouillage des supports de drone sur le corps de drone.

On va maintenant décrire un exemple de mise en oeuvre de la présente invention, en référence aux dessins annexés.
La Figure 1 est une vue d'ensemble montrant le drone et le dispositif de pilotage associé permettant son pilotage.
La Figure 2 est une vue du drone conformément à l'invention.
Les Figures 3A et 3B sont des vues du drone ayant les bras de liaison repliés conformément à l'invention.
La Figure 3C montre un mode de réalisation particulier des bras de liaison repliés conformément à l'invention.
La Figure 4 représente les moyens du drone permettant de replier les bras du drone conformément à l'invention.
Les Figures 5A et 5B représentent un exemple de mise en oeuvre du moyen de verrouillage/déverrouillage du pliage des bras de liaison du drone conformément à l'invention.
La Figure 6 représente illustre le procédé de pliage des bras de liaison du drone conformément à l'invention.
La Figure 7 représente le passage de câble d'alimentation du bloc propulseur.
La Figure 8 représente le système de relevage d'un support de drone conformément à l'invention.
La Figure 9 est une vue détaillée du système de relevage d'un support de drone conformément à l'invention.
La Figure 10 représente les moyens de verrouillage du support de drone conformément à l'invention.
La Figure 11 montre le drone avec les supports de drone relevés.

On va maintenant décrire un exemple de réalisation de l'invention.

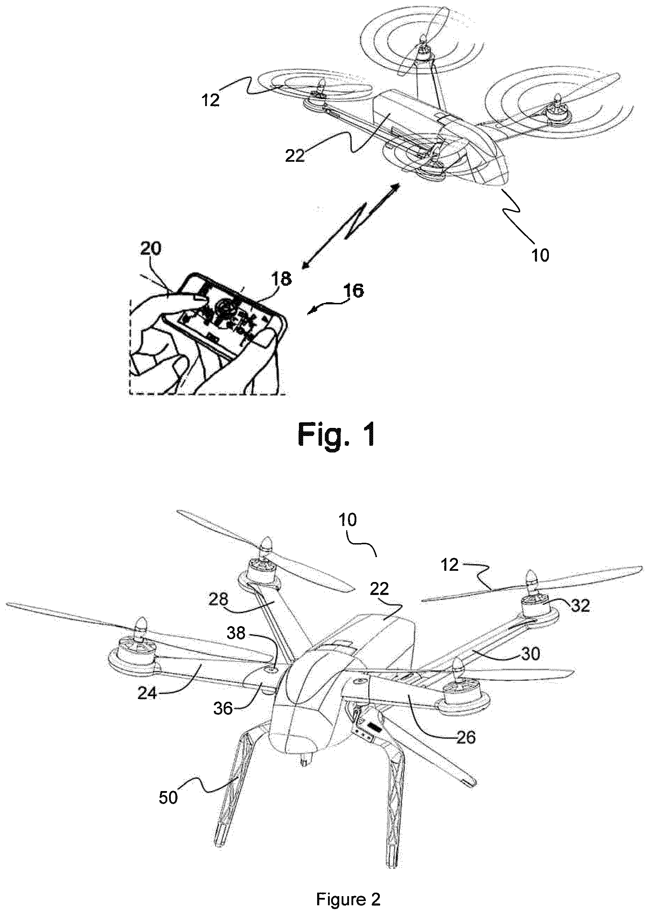

Sur la Figure 1, la référence 10 désigne de façon générale un drone. Selon l'exemple illustré en Figure 1, il s'agit d'un drone de type quadricoptère.

Le drone quadricoptère comporte un corps de drone 22, et deux bras de liaison avant et deux bras de liaison arrière s'étendant à partir du corps de drone et comprenant à leur extrémité distale un bloc propulseur, les positions avant et arrière des bras de liaison étant définies par rapport au sens principal de vol dudit drone. Le bloc propulseur comprend un moteur et une hélice 12 assemblée sur ledit moteur.

Les blocs propulseurs sont pilotés indépendamment par un système intégré de navigation et de contrôle d'attitude.

Le drone 10 comporte également une caméra à visée frontale (non représentée) permettant d'obtenir une image de la scène vers laquelle est dirigé le drone. Le drone comporte également une caméra à visée verticale (non représentée) pointant vers le bas, apte à capter des images successives du terrain survolé et utilisée notamment pour évaluer la vitesse du drone par rapport au sol.

Selon un exemple de réalisation, le drone est muni de capteurs inertiels (accéléromètres et gyromètres) permettant de mesurer avec une certaine précision les vitesses angulaires et les angles d'attitude du drone, c'est-à-dire les angles d'Euler (tangage *ϕ*, roulis *θ* et cap *ψ*) décrivant l'inclinaison du drone par rapport à un plan horizontal d'un repère terrestre fixe, étant entendu que les deux composantes longitudinale et transversale de la vitesse horizontale sont intimement liées à l'inclinaison suivant les deux axes respectifs de tangage et de roulis. Un télémètre à ultrasons disposé sous le drone fournit par ailleurs une mesure de l'altitude par rapport au sol.

Le drone 10 est piloté par un dispositif de pilotage 16 distant tel qu'un téléphone ou une tablette multimédia à écran tactile et accéléromètres intégrés, par exemple un téléphone cellulaire de type *iPhone* (marque déposée) ou autre, ou une tablette de type *iPad* (marque déposée) ou autre. Il s'agit d'un appareil standard, non modifié si ce n'est le chargement d'un logiciel applicatif spécifique pour contrôler le pilotage du drone 10. Selon ce mode de réalisation, l'utilisateur contrôle en temps réel le déplacement du drone 10 via le dispositif de pilotage 16.

Le dispositif de pilotage distant 16 est un appareil pourvu d'un écran tactile 18 affichant l'image captée par la caméra embarquée 14 du drone 10, avec en superposition un certain nombre de symboles permettant l'activation de commandes par simple contact du doigt 20 d'un utilisateur sur l'écran tactile 18. Il communique avec le drone 10 via un échange bidirectionnel de données par liaison sans fil de type réseau local Wi-Fi (IEEE 802.11) ou *Bluetooth* (marques déposées) : du drone 10 vers le dispositif de pilotage 16 notamment pour la transmission de l'image captée par la caméra, et du dispositif de pilotage 16 vers le drone 10 pour l'envoi de commandes de pilotage.

En Figure 2 est illustré en détail le drone quadricoptère de la Figure 1. Le drone quadricoptère 10 comporte un corps de drone 22 et deux bras de liaison avant 24, 26 et deux bras de liaison arrière 28, 30 s'étendant à partir du corps de drone 22 et comprenant à leur extrémité distale un bloc propulseur 32 sur lequel est assemblée une hélice 12, les positions avant et arrière des bras de liaison étant définies par rapport au sens principal de vol dudit drone.

Le drone quadricoptère 10 présente une structure de châssis particulière, notamment l'utilisation d'une forme appelée "VTail" à l'arrière du drone par rapport au déplacement principal de vol du drone. En d'autres termes, le châssis est modifié de telle sorte que les deux bras de liaison arrière 28, 30 forment un V entre eux.

Ainsi, les points de fixation au corps du drone des deux bras de liaison avant 24, 26 et les points de fixation au corps du drone des deux bras de liaison arrière 28, 30 sont situés à des hauteurs respectives différentes par rapport au plan médian horizontal du corps du drone 22.

En outre, les deux bras de liaison avant 24, 26 du drone forment un premier angle d'inclinaison par rapport au plan médian horizontal du corps du drone et les deux bras de liaison arrière 28, 30 forment un second angle d'inclinaison par rapport au plan médian horizontal du corps du drone différent du premier angle.

Selon un exemple de mode de réalisation, deux bras de liaison avant 24, 26 du drone forment un angle de 0 à 10° par rapport au plan médian horizontal du corps du drone et les deux bras de liaison arrière 28, 30 forment un angle compris entre 15° et 45°. Selon un mode de réalisation particulier, l'angle relatif aux deux bras de liaison arrière est environ 30°.

Les hélices 12 assemblées sur les blocs propulseurs 32 respectivement du bras avant 26 et du bras arrière 30 sont positionnées dans un même plan, notamment un même plan de rotation. Et les hélices 12 assemblées sur les blocs propulseurs 32 respectivement du bras avant 24 et du bras arrière 28 sont positionnées dans un même plan, notamment un même plan de rotation. En d'autres termes, les hélices assemblées sur les blocs propulseurs 32 d'un même côté du drone sont positionnées dans un même plan, notamment un même plan de rotation. Le côté du drone est défini au regard du sens principal de vol du drone.

Selon une alternative de réalisation, l'ensemble des hélices assemblées sur les blocs propulseurs du drone sont positionnées dans un même plan, notamment un même plan de rotation.

Les hélices 12 sont aptes à être désassemblées du bloc propulseur 32, soit pour être rangées soit pour être changées dans le cas où les hélices sont endommagées.

Selon un mode de réalisation particulier, les hélices assemblées sur les blocs propulseurs 32 des bras de liaison 24, 26 avant du drone mesurent 279 millimètres de diamètre alors que les hélices 12 assemblées sur les blocs propulseurs des bras de liaison arrière 28, 30 du drone mesurent 229 millimètres de diamètre.

Selon un mode de réalisation particulier, le drone 10 est apte à transporter différents capteurs embarqués. Les capteurs sont en particulier fixés sur le corps du drone, notamment sur la structure inférieure du drone. Selon un autre mode de réalisation, les capteurs sont insérés dans un support, lui-même accroché sur la structure externe inférieure du drone.

Les capteurs embarqués sur le drone sont par exemple une caméra, une caméra 360° ou une caméra stéréoscopique.

Le drone comprend également au moins un support de drone 50. Tel qu'illustré en Figure 2, le drone comprend deux supports de drone 50 chacun muni de deux pieds.

Le drone, de par sa structure, présente un encombrement important ce qui présente comme inconvénient qu'un tel drone est difficilement transportable.

Afin de répondre à cet impératif, et conformément à l'invention, les bras de liaison 24, 26, 28, 30 du drone sont aptes à se plier le long du corps dudit drone 22 afin de réduire l'encombrement du drone lors de son transport.

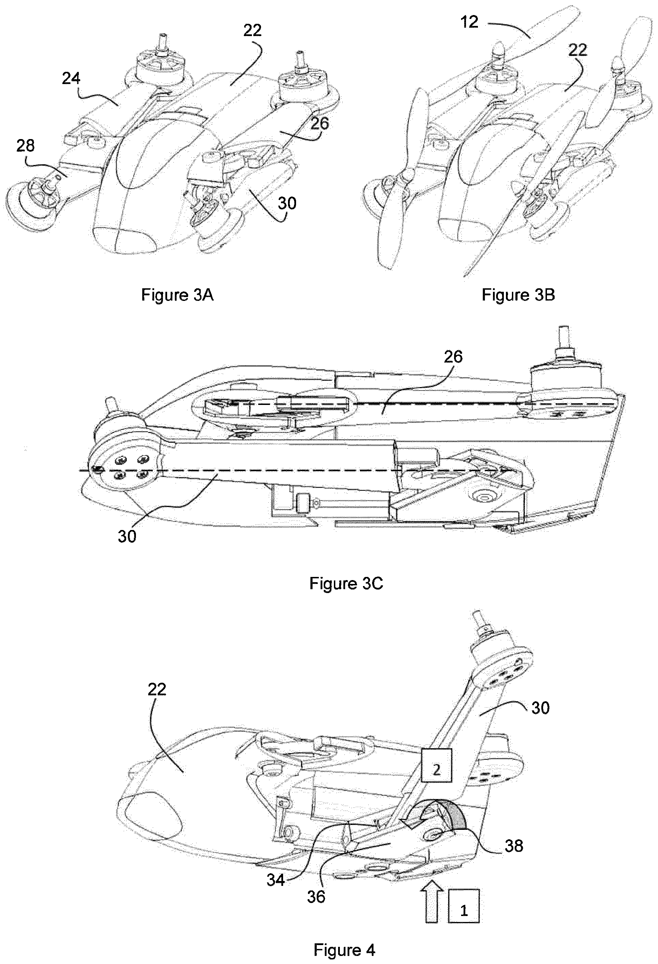

La Figure 3A illustre le drone dans une configuration transportable aisément dans laquelle les hélices ont été désassemblées et les bras de liaison ont été repliés le long du corps de drone.

Toutefois, dans une alternative de réalisation les bras de liaison du drone peuvent être repliés tout en conservant les hélices assemblées sur les blocs propulseurs du drone tel qu'illustré en Figure 3B.

Comme illustré en Figure 3A, en position pliée, les bras de liaison sont repliés par paire (24, 28) et (26, 30), la paire étant formée d'un bras de liaison avant et d'un bras de liaison arrière, lesdits bras de liaison étant pliés l'un au-dessus de l'autre.

En particulier, lorsque les bras de liaison sont repliés, les bras de liaison d'une paire de bras s'étendent dans des plans respectifs parallèles entre eux et les paires de bras s'étendent de part et d'autre du plan médian horizontal du corps de drone tel que montré en Figure 3C.

Pour ce faire, les bras de liaison sont reliés respectivement au corps de drone par un moyen de pivotement 34, le moyen de pivotement 34 comprenant un moyen de verrouillage/déverrouillage du pliage 38 tel que montré en Figure 4.

Selon un exemple de réalisation, le moyen de pivotement 34 est positionné sensiblement en extérieur du profil principal du corps de drone 22. Pour ce faire, le corps de drone comprend au niveau de chacun des bras de liaison une excroissance 36 sur laquelle est positionné le moyen de pivotement 34.

Comme illustré en Figure 4, les moyens de verrouillage/déverrouillage du pliage 38 sont positionnés sous les bras de liaison.

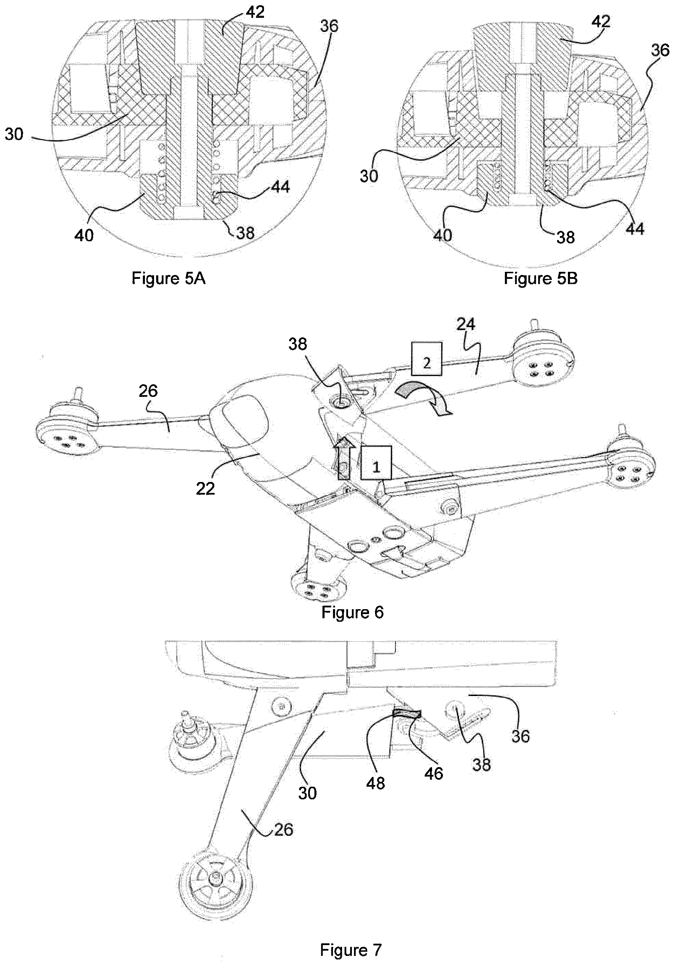

Selon un mode de réalisation particulier, ledit moyen de verrouillage du pliage 38 illustré en Figures 5A et 5B comprennent au moins deux positions, à savoir, une position verrouillée lorsque les bras sont dépliés et une position déverrouillée lorsque les bras de liaison sont en position dépliée et aptes à être repliés ou repliés.

La position verrouillée du moyen de verrouillage/déverrouillage du pliage 38 permet de maintenir les bras de liaison en position dépliée. En d'autres termes, la position verrouillée permet de maintenir les bras de liaison dans leur position normale pour permettre le vol du drone. En outre, le moyen de verrouillage permet d'éviter tout incident de repliement non désiré, notamment en cours de vol.

Les Figures 5A et 5B illustrent un exemple de mise en oeuvre du moyen de verrouillage/déverrouillage du pliage conformément à l'invention, respectivement dans la positionnée verrouillée et dans la positionnée déverrouillée.

Selon un exemple de réalisation illustré aux Figures 5A et 5B, le moyen de verrouillage/déverrouillage du pliage 38 est un bouton-poussoir 40 qui comprend selon un mode de réalisation un pion de blocage 42 et un ressort 44. Le pion de blocage 42 peut être de forme conique.

La Figure 5A illustre le moyen de verrouillage/déverrouillage du pliage 38 en position verrouillée alors que la Figure 5B illustre le moyen de verrouillage/déverrouillage du pliage 38 en position déverrouillée.

Sur ces figures sont représentés l'excroissance 36 du corps de drone 22 sur lequel le bras de liaison est fixé, le bras de liaison 30 et le moyen de verrouillage/déverrouillage 38.

Dans la position verrouillée, le pion de blocage 42 conique tel qu'illustré est simultanément en contact avec le corps de drone 22 et le bras de liaison 30 afin de bloquer tout mouvement de l'un par rapport à l'autre.

Dans la position déverrouillée, le pion de blocage 42 conique est extrait de son emplacement dans le bras de liaison 30 de sorte à permettre un mouvement de rotation du bras de liaison.

Le passage de la position verrouillée à la position déverrouillée est réalisé par le bouton-poussoir 40.

Le moyen de verrouillage/déverrouillage du pliage 38 comprend également un ressort 44 de sorte à permettre un verrouillage automatique du moyen de verrouillage/déverrouillage du pliage lorsque l'excroissance du corps de drone 36 et le bras de liaison 30 sont en position prêt pour le vol.

Selon le mode de réalisation du pliage maintenant décrit, le pliage des bras de liaison débute par le pliage des bras avant.

Pour ce faire, tel que représenté en Figure 6, le moyen de verrouillage/déverrouillage du pliage 38, par exemple le bouton poussoir est actionné sous le bras de liaison de chacun des bras de liaison avant 24, 26.

Puis les bras de liaison avant du drone sont repliés le long du corps du drone 22. Ainsi, les bras de liaison sont repliés vers l'arrière du drone. Ensuite, tel que représenté en Figure 4 précédemment décrite, le moyen

de verrouillage/déverrouillage du pliage 38, par exemple le bouton-poussoir 40 est actionné sous le bras de liaison de chacun des bras de liaison arrière 28, 30. Puis les bras de liaison arrière du drone sont repliés le long du corps du drone 22. Ainsi, les bras de liaison arrière sont repliés vers l'avant du drone.

La Figure 3C illustre un mode de réalisation de l'invention dans lequel les paires de bras de liaison sont repliées, les bras de liaison de ladite paire étant sensiblement alignés parallèlement l'un par rapport à l'autre.

Le bloc propulseur 32 est relié au corps de drone 22 via un câble de commande et d'alimentation afin d'être piloté par l'électronique contenue dans le corps de drone.

Tel qu'illustré en Figure 7, le câble de commande 46 est placé dans une goulotte de passage de câble afin d'être protégé, la goulotte étant présente dans le bras de liaison et dans le corps de drone. Lorsque les bras de liaison du drone sont repliés, il est observé que le câble de commande n'est plus protégé au niveau du moyen de pivotement.

Ainsi, afin de maintenir ce câble de commande protégé, le câble est inséré dans un passe-câble 48 de sorte à ne pas permettre un accès direct à ce câble lorsque le bras de liaison est dans une position repliée.

Comme indiqué précédemment, le drone quadricoptère est notamment apte à embarqué sur sa structure des capteurs, notamment une caméra, une caméra 360° ou une caméra stéréoscopique. De préférence, le capteur est fixé au corps de drone 22 sur la structure inférieure du corps de drone ou dans un support lui-même fixé sur la partie inférieure du corps de drone.

Une telle configuration de drone présente l'inconvénient suivant. Le capteur video couvre dans son champ de vision, au moins une partie des supports du drone voire l'ensemble des supports du drone lors de l'utilisation d'un capteur video 360° agencé sous le corps de drone. Ainsi, il est observé que les supports du drone rentrant dans le champ de vision du capteur viennent perturber la qualité de l'image video et altèrent l'aspect visuel de la séquence video.

Un drone, comme illustré en Figure 2, comprend au moins deux supports de drone 50 s'étendant à partir du corps de drone.

Chaque support de drone comprend au moins un pied. Le drone illustré en Figure 2 comprend deux supports de drone, ayant chacun deux pieds.

Conformément à l'invention, les supports 50 du drone comprennent respectivement un moyen de relevage 52 et le corps de drone 22 comprend au moins un dispositif de commande de relevage 54 en liaison avec chacun des moyens de relevage 52 des supports de drone 50 de sorte que les supports de drone puissent être relevés lorsque le drone est en vol.

Ainsi, une telle configuration du support de drone permet d'une part, un atterrissage du drone et une position stable du drone au sol lorsque les supports de drone 50 ne sont pas relevés, et d'autre part, d'avoir un champ visuel dégagé sous le drone lorsque les supports de drone 50 sont relevés.

En effet, la position relevée des supports de drone permet de supprimer les supports du drone du champ visuel du capteur video et donc permet d'avoir une image video de très grande qualité visuelle et non perturbée notamment par les pieds des supports de drone.

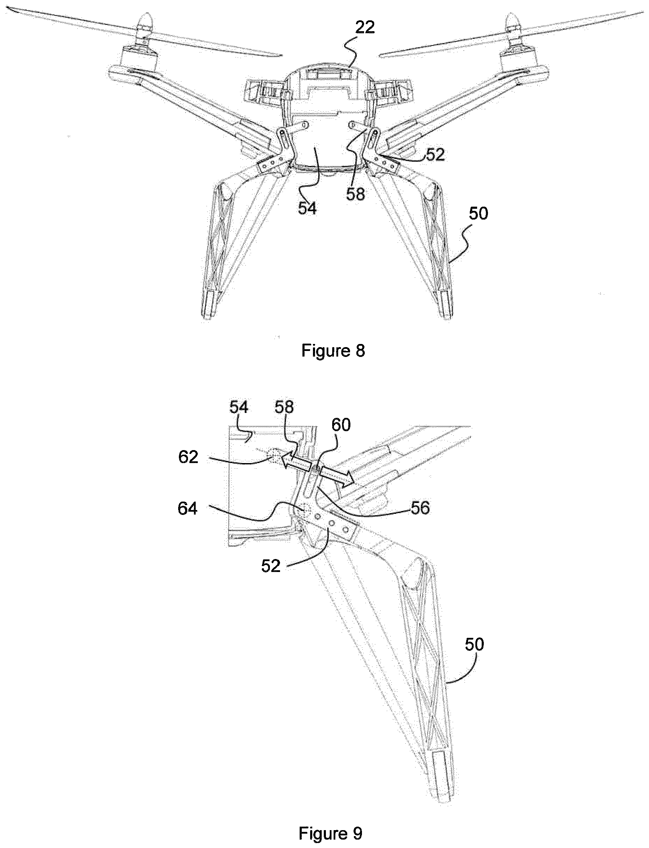

La Figure 8 illustre un tel drone selon une coupe verticale réalisée au niveau du dispositif de commande de relevage 54 et des moyens de relevage 52 des supports de drone.

Ainsi, il est illustré un corps de drone 22 comprenant un dispositif de commande de relevage 54. Ce dispositif de commande est par exemple une boite à engrenages.

Le drone comprend des supports de drone 50 comprenant au niveau de leur fixation au corps du drone 22, un moyen de relevage 52 coopérant avec le dispositif de commande de relevage 54.

Selon un mode de réalisation particulier et tel qu'illustré en Figure 9, le moyen de relevage 52 d'un support de drone comprend une bielle de relevage 56.

En outre, le dispositif de commande de relevage 54 comprend des manivelles de relevage 58 pivotantes, reliées par un moyen de couplage 60 respectivement à la bielle de relevage 56 du moyen de relevage 52 du support de drone de sorte à permettre le relevage des supports de drone.

Selon ce mode de réalisation, en position non relevée du support de drone, la position des manivelles 58 et des moyens de relevage 52 sont dans une position qui annule les forces résultantes dans le dispositif de commande de relevage 54 provenant du poids du drone ainsi que du choc du drone lors de l'impact au sol lors de l'atterrissage.

Comme illustré aux Figures 8 et 9, la manivelle de relevage 58 est entrainée en rotation par le dispositif de commande de relevage 54. Pour ce faire, une extrémité de la manivelle de relevage 58 est fixée à un axe de rotation 62 du dispositif de commande de relevage 54, cet axe de rotation étant mis en rotation par le dispositif de commande de relevage.

La seconde extrémité de la manivelle de relevage 58 comprend le moyen de couplage 60 apte à coopérer avec la bielle de relevage 56 du moyen de relevage 52.

Ainsi, selon ce mode de réalisation, le système bielle-manivelle est mis en oeuvre.

Le moyen de couplage 60 est par exemple un axe fermement solidarisé à la manivelle 58 venant s'insérer dans l'ouverture de la bielle de relevage 56.

Selon un autre exemple de réalisation du dispositif de commande de relevage 54, celui-ci est réalisé par un motoréducteur d'entrainement dudit axe de rotation de la manivelle de relevage. Un tel motoréducteur est un ensemble constitué d'un réducteur et d'un moteur électrique. Le réducteur permet de réduire la vitesse de rotation du moteur électrique.

Tel qu'illustré en Figure 9, le moyen de relevage 52 comprend dans sa partie centrale une articulation pivotante du support 64.

Cette articulation pivotante du support 64 est par exemple composée d'un axe de pivot qui vient s'insérer dans le corps du drone afin de permettre une rotation du moyen de relevage selon cet axe.

De façon alternative, l'articulation pivotante du support 64 est par exemple un trou traversant de type perforation, notamment de forme ronde, dans lequel vient s'insérer un axe de rotation de forme complémentaire solidarisé au corps de drone.

Le moyen de relevage 52 comprend par exemple deux branches s'étendant de la partie centrale du moyen de relevage, notamment de l'articulation pivotante 64 et formant un angle entre ces branches.

L'angle formé entre les deux branches est compris entre 75 et 105° et préférentiellement de 90°.

Selon le mode de réalisation illustré en Figure 9, l'une des branches comprend la bielle de relevage 56 reliée à une manivelle de relevage 58 du dispositif de commande de relevage et la deuxième branche est solidaire du support de drone.

Selon ce mode de réalisation, la direction de la force exercée sur la manivelle de relevage est centrée sensiblement sur l'axe de pivot de la manivelle de relevage et n'exerce aucun couple sur cette dernière. Les efforts à l'intérieur du dispositif de commande de relevage sont inexistants ou très faibles.

Conformément à l'invention, le dispositif de commande de relevage 54 permet après le décollage du drone, le relevage des supports du drone de manière à libérer le champ de vision du capteur video fixé par exemple sur la surface inférieure du corps de drone.

Pour ce faire, le dispositif de commande de relevage 54 est piloté par le dispositif de pilotage 16 illustré en Figure 1. En particulier, le dispositif de pilotage 16 comprend une commande de relevage et d'abaissement des supports du drone. Cette commande est émise du dispositif de pilotage au drone via la liaison de communication établie entre le dispositif de pilotage et le drone.

Selon un mode de réalisation, l'utilisateur par une action sur le dispositif de pilotage actionne la commande de relevage et d'abaissement des supports du drone.

Selon un mode de réalisation alternatif, après l'activation d'une commande par l'utilisateur de décollage du drone, le dispositif de pilotage émet, après décollage, une commande de relevage des supports de drone.

De même, lorsque le drone est en vol, l'utilisateur peut actionner sur le dispositif de pilotage une commande d'abaissement des supports du drone notamment en vue d'atterrir.

Selon un mode de réalisation alternatif, après l'activation d'une commande par l'utilisateur d'atterrissage du drone, le dispositif de pilotage émet, avant de procéder à l'atterrissage, une commande d'abaissement des supports du drone.

Sur réception de la commande de relevage/d'abaissement des supports de drone, le drone contrôle l'état du drone et exécute la commande si l'état du drone le permet. Par exemple, la commande de relevage des supports de drone ne sera pas exécutée lorsque le drone est au sol.

Si l'état du drone permet l'exécution de ladite commande, alors cette commande pilotée par le dispositif de contrôle du drone va être exécutée en actionnant le dispositif de commande de relevage 54 du corps de drone.

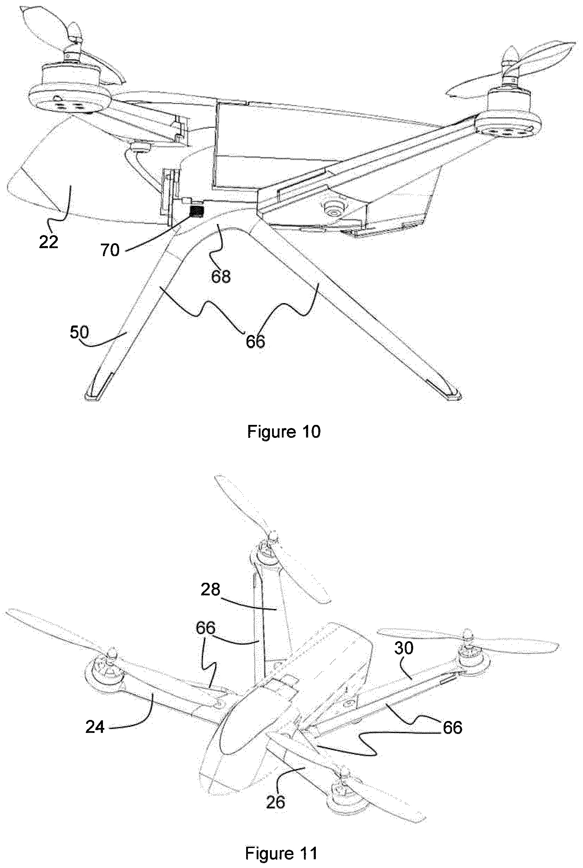

La Figure 10 correspond au drone de la Figure 2 selon une vue de côté du drone. Ce drone comprend deux supports de drone 50, et chaque support de drone comprend respectivement deux pieds 66 reliés entre eux par une section centrale 68.

Selon un mode de réalisation particulier illustré en Figure 10, ladite section centrale 68 du support de drone est apte à pivoter pour permettre le relevage des pieds.

La Figure 11 illustre un mode de réalisation dans lequel, de façon caractéristique de l'invention, les supports de drone viennent en alignement avec les bras de liaison pendant le vol du drone (c'est-à-dire avec les bras déployés et les supports de drone repliés).

Du point de vue aérodynamique, cet agencement donne à l'ensemble bras-support la configuration d'un corps profilé permettant de pratiquement supprimer la trainée de forme propre aux supports, trainée qui, autrement, se serait ajoutée à la trainée propre engendrée par les bras de liaison (la trainée étant définie comme la force qui s'oppose au mouvement des supports du drone dans l'air).

Dans une forme de réalisation particulière, avantageuse, les supports de drone forment respectivement le bord d'attaque des bras de liaison positionnés à l'arrière du drone et/ou le bord de fuite des bras de liaison positionnés à l'avant du drone (les positions avant et arrière des bras de liaison étant définies par rapport au sens principal de vol dudit drone).

Pour ce faire, les supports de drone en position relevée s'intègrent dans la forme des bras du drone pour reconstituer une forme de type "aile d'avion" c'est-à-dire ayant une voilure portante, avec un bord d'attaque et un bord de fuite permettant de réduire encore plus la trainée des supports lors du vol du drone.

En outre, il est observé que selon le mode de réalisation illustré en Figure 11, les supports de drone dans la position relevée assurent un système de blocage supplémentaire en vol notamment dans le cas de bras de liaison pliables. Les supports de drone dans la position relevée viennent alors renforcer structurellement les bras de liaison lors du vol du drone.

Selon un mode de réalisation particulier, les supports de drone sont aptes à être désolidarisés du corps de drone, notamment afin de réduire l'encombrement du drone, en particulier pour son transport.

Pour ce faire et comme illustré en Figure 10, les supports de drone comprennent respectivement un moyen de verrouillage/déverrouillage des supports de drone 70 sur le corps de drone.

Le moyen de verrouillage/déverrouillage des supports de drone est apte à maintenir fermement le support de drone au corps de drone dans la position verrouillée. En outre dans la position déverrouillée, le support de drone est apte à être retiré du corps de drone, notamment le moyen de relevage 52 du support de drone peut être désassemblé du dispositif de commande de relevage.

Il est maintenant décrit le procédé de désolidarisation du support de drone, du corps de drone. Ce procédé est basé sur deux étapes à réaliser sur chaque support et présente l'avantage de ne pas nécessiter d'outillage.

Une première étape consiste à actionner le moyen de verrouillage/déverrouillage des supports de drone 70 afin de déverrouiller ledit moyen et donc permettre une désolidarisation du support. Une seconde étape consiste à déplacer le support de drone 50 vers l'avant du drone, l'avant du drone étant défini par le sens principal de vol du drone. Ce déplacement permet par exemple de désolidariser le moyen de relevage 52 de la manivelle de relevage 58 et donc du dispositif de commande de relevage 54.

En outre ce déplacement permet de désolidariser le moyen de relevage 52 de l'articulation pivotante du corps de drone 64. Une fois la désolidarisation du moyen de relevage avec la manivelle de relevage et l'articulation pivotante, le support de drone est apte à être retiré du drone.

L'ensemble du système de relevage des supports de drone a été illustré sur un drone présentant une structure particulière notamment en ce que les points de fixation au corps du drone des deux bras de liaison avant 24, 26 et les points de fixation au corps du drone des deux bras de liaison arrière 28, 30 sont situés à des hauteurs respectives différentes par rapport au plan médian horizontal du corps du drone, et les deux bras de liaison avant du drone 24, 26 forment un premier angle d'inclinaison par rapport au plan médian horizontal du corps du drone et les deux bras de liaison arrière 28, 30 forment un second angle d'inclinaison par rapport au plan médian horizontal du corps du drone différent du premier angle.

Toutefois, cet ensemble du système de relevage des supports de drone est également apte à être mis en oeuvre sur un drone comprenant des points de fixation au corps du drone des deux bras de liaison avant et les points de fixation au corps du drone des deux bras de liaison arrière situés à une même hauteur par rapport au plan médian horizontal du corps du drone, et les deux bras de liaison avant du drone forment un même angle d'inclinaison par rapport au plan médian horizontal du corps du drone que les deux bras de liaison arrière par rapport au plan médian horizontal du corps du drone.

## Revendications

1. Drone à voilure tournante (10), comprenant :
- un corps de drone (22) ;
- des bras de liaison (24, 26, 28, 30) s'étendant à partir du corps de drone et comprenant à leur extrémité un bloc propulseur (32) ;
- au moins deux supports de drone (50) s'étendant à partir du corps de drone, lesdits supports comprenant respectivement un moyen de relevage (52) ; et
- au moins un dispositif de commande de relevage (54) en liaison avec chacun des moyens de relevage des supports de drone de sorte que les supports de drone soient aptes à être relevés lorsque le drone est en vol,
**caractérisé en ce qu'**en position relevée les supports de drone viennent respectivement en alignement avec les bras de liaison.

2. Drone selon la revendication 1, **caractérisé en ce qu'**en position relevée les supports de drone forment respectivement le bord d'attaque des bras de liaison positionnés à l'arrière du drone et/ou le bord de fuite des bras de liaison positionnés à l'avant du drone, les positions avant et arrière des bras de liaison étant définies par rapport au sens principal de vol dudit drone.

3. Drone selon la revendication 1, **caractérisé en ce que** lesdits supports de drone (50) comprennent respectivement deux pieds (66) reliés entre eux par une section centrale (68), ladite section centrale étant apte à pivoter pour permettre le relevage des pieds.

4. Drone selon la revendication 1, **caractérisé en ce que** le moyen de relevage d'un support de drone comprend une bielle de relevage (56) et le dispositif de commande de relevage (54) comprend des manivelles de relevage (58) pivotantes reliées par un moyen de couplage (60) respectivement à la bielle de relevage des supports de drone de sorte à permettre le relevage des supports de drone.

5. Drone selon la revendication 4, **caractérisé en ce que** la manivelle de relevage est entrainée, en rotation par le dispositif de commande de relevage, à une extrémité par un axe de rotation et la manivelle de relevage comprend à son autre extrémité le moyen de couplage apte à coopérer avec la bielle de relevage du moyen de relevage.

6. Drone selon la revendication 5, **caractérisé en ce que** le dispositif de commande de relevage comprend un motoréducteur d'entrainement dudit axe de rotation de la manivelle de relevage.

7. Drone selon la revendication 4, **caractérisé en ce que** le moyen de relevage comprend dans sa partie centrale une articulation pivotante du support (64) et deux branches s'étendant de la partie centrale et formant un angle entre elles, l'une des branches comprend la bielle de relevage (56) reliée à une manivelle de relevage (58) du dispositif de commande de relevage (54) et la deuxième branche étant solidaire du support de drone.

8. Drone selon la revendication 1, **caractérisé en ce que** les supports de drone (50) sont aptes à être désolidarisés du corps de drone.

9. Drone selon la revendication 8, **caractérisé en ce que** les supports de drone (50) comprennent respectivement un moyen (70) de verrouillage/déverrouillage des supports de drone sur le corps de drone.

## Patentansprüche

1. Rotorblattdrohne (10), umfassend:
- einen Drohnenkörper (22);
- Verbindungsarme (24, 26, 28, 30), die sich von dem Drohnenkörper erstrecken und an ihrem Ende ein Triebwerk (32) umfassen:
- mindestens zwei Drohnenträger (50), die sich von dem Drohnenkörper erstrecken, wobei die Träger jeweils ein Anhebemittel (52) umfassen; und
- mindestens eine Hebesteuerungsvorrichtung (54) in Verbindung mit jedem der Hebemittel der Drohnenträger, in der Form, dass die Drohnenträger angehoben werden können, wenn die Drohne fliegt,
**dadurch gekennzeichnet**, in der angehobenen Position die Drohnenträger jeweils mit den Verbindungsarmen zur Fluchtung kommen.

2. Drohne nach Anspruch 1, **dadurch gekennzeichnet, dass** in der angehobenen Position die Drohnenträger jeweils die Vorderkante der Verbindungsarme bilden, die hinten an der Drohne positioniert sind, und/oder die Hinterkante der Verbindungsarme bilden, die vorne an der Drohne positioniert sind, wobei die vordere und die hintere Position der Verbindungsarme relativ zu der Hauptflugrichtung der Drohne definiert sind.

3. Drohne nach Anspruch 1, **dadurch gekennzeichnet, dass** die Drohnenträger (50) jeweils zwei Füße (66) umfassen, die durch einen mittleren Abschnitt (68) miteinander verbunden sind, wobei der mittlere Abschnitt schwenkbar ist, um das Anheben der Füße zu gestatten.

4. Drohne nach Anspruch 1, **dadurch gekennzeichnet, dass** das Anhebemittel des Drohnenträgers ein Anhebepleuel (56) umfasst und die Anhebesteuerungsvorrichtung (54) schwenkbare Anhebekurbeln (58) umfasst, die durch ein Kupplungsmittel (60) jeweils mit dem Anhebepleuel der Drohnenträger verbunden sind, in der Form, dass sie das Anheben der Drohnenträger gestatten.

5. Drohne nach Anspruch 4, **dadurch gekennzeichnet, dass** die Anhebekurbel durch die Anhebesteuerungsvorrichtung an einem Ende durch eine Rotationsachse zur Drehung angetrieben ist und die Anhebekurbel an ihrem anderen Ende das Kupplungsmittel umfasst, das für das Zusammenwirken mit dem Anhebepleuel des Anhebemittels in der Lage ist.

6. Drohne nach Anspruch 5, **dadurch gekennzeichnet, dass** die Anhebesteuerungsvorrichtung einen Getriebemotor zum Antreiben der Rotationsachse der Anhebekurbel umfasst.

7. Drohne nach Anspruch 4, **dadurch gekennzeichnet, dass** das Anhebemittel in seinem mittleren Teil ein Schwenkgelenk des Trägers (64) und zwei Schenkel umfasst, die sich von dem mittleren Teil erstrecken und miteinander einen Winkel bilden, wobei der eine der Schenkel das Anhebepleuel (56) umfasst, das mit einer Anhebekurbel (58) der Anhebesteuerungsvorrichtung (54) verbunden ist, und der zweite Schenkel fest mit dem Drohnenträger verbunden ist.

8. Drohne nach Anspruch 1, **dadurch gekennzeichnet, dass** die Drohnenträger (50) von dem Drohnenkörper lösbar sind.

9. Drohne nach Anspruch 8, **dadurch gekennzeichnet, dass** die Drohnenträger (50) jeweils ein Mittel (70) zur Verriegelung/Entriegelung der Drohnenträger an dem Drohnenkörper umfassen.

## Claims

1. A rotary-wing drone (10), comprising:
- a drone body (22);
- linking arms (24, 26, 28, 30) extending from the drone body and comprising at their end a propulsion unit (32);
- at least two drone supports (50) extending from the drone body, said supports respectively comprising a lifting means (52); and
- at least one lifting control device (54) linked with each of the drone support lifting means so that the drone supports are adapted to be lifted when the drone flies,
**characterized in that**, in the lifted position, the drone supports respectively come into alignment with the linking arms.

2. The drone according to claim 1, **characterized in that**, in the lifted position, the drone supports respectively form the leading edge of the linking arms positioned on the rear of the drone and/or the trailing edge of the linking arms positioned on the front of the drone, the front and rear positions of the linking arms being defined with respect to the main direction of flight of said drone.

3. The drone according to claim 1, **characterized in that** said drone supports (50) respectively comprise two feet (66) connected to each other by a central section (68), said central section being adapted to pivot in order to allow the lifting of the feet.

4. The drone according to claim 1, **characterized in that** the drone support lifting means comprises a lifting rod (56) and the lifting control device (54) comprises pivoting lifting cranks (58) respectively connected by a coupling means (60) to the drone support lifting rod so as to allow the lifting of the drone supports.

5. The drone according to claim 4, **characterized in that** the lifting crank is driven into rotation by the lifting control device at one end, through a rotation spindle, and the lifting crank comprises, at its other end, the coupling means adapted to cooperate with the lifting rod of the lifting means.

6. The drone according to claim 5, **characterized in that** the lifting control device comprises a gear motor for driving said rotation spindle of the lifting crank.

7. The drone according to claim 4, **characterized in that** the lifting means comprises in its central part a pivoting support articulation (64) and two branches extending from the central part and forming an angle between each other, one of the branches comprises the lifting rod (56) connected to a lifting crank (58) of the lifting control device (54), the second branch being integral with the drone support.

8. The drone according to claim 1, **characterized in that** the drone supports (50) are adapted to be separated from the drone body.

9. The drone according to claim 8, **characterized in that** the drone supports (50) respectively comprise a means (70) for locking / unlocking the drone supports on the drone body.
